# EUROPÄISCHE PATENTSCHRIFT

(11) **EP 0 347 670 B1**
(45) Veröffentlichungstag und Bekanntmachung des Hinweises auf die Patenterteilung: **21.04.1993**
(21) Anmeldenummer: 89110463.0
(22) Anmeldetag: 09.06.1989
(51) Int. Cl.: G11B 23/087

(54) **Magnetbandcassette**
Magnetic tape cassette
Cassette à bande magnétique

(30) Priorität: 22.06.1988 DE 8807993 U
(43) Veröffentlichungstag der Anmeldung: 27.12.1989
(73) Patentinhaber: BASF Magnetics GmbH, 68165 Mannheim (DE)
(72) Erfinder: Lutz, Gottfried, D-8031 Seefeld (DE); Graczoll, Peter, D-8000 München 70 (DE); Pertzsch, Albert, D-8000 München 71 (DE); Toral, José, D-8000 München 70 (DE); Zeroni, Ludwig, D-8012 Ottobrunn (DE)
(74) Vertreter: Münch, Volker, Dr.

(56) Entgegenhaltungen:
- EP-A- 0 030 367
- EP-A- 0 045 084
- EP-A- 0 060 497
- EP-A- 0 191 307
- DE-U- 8 807 993
- FR-A- 2 556 433
- GB-A- 2 151 583

## Beschreibung

Die Neuerung betrifft eine Magnetbandcassette, bei der eine Andruckfeder am Bandcassettengehäuse befestigt ist, welche eine oder mehrere Bandspulen in Richtung einer definierten Betriebslage federnd belastet, die aus einem Blechstreifen hergestellt ist, im wesentlichen parallele Längskanten besitzt und im Mittelbereich Befestigungseinrichtungen aufweist.

Die meisten auf dem Markt befindlichen Magnetbandcassetten, insbesondere Videocassetten des VHS- und Beta-Videosystems wie auch 8-mm-Cassetten besitzen Andruckfedern. Dabei werden die meist koplanar angeordneten Spulen von innnerhalb der oberen Gehäusehälfte befestigten, aus Federblech gestanzten und gekrümmten Federn in Richtung der unteren Gehäusehälfte gedrückt. Dadurch wird bei den in entsprechende Abspielgeräte eingelegten Cassetten ein gleichmäßiges Aufliegen der Spulen auf die geräteseitigen Kernaufnahmen und ein ruhiger Lauf der Spulen beim Abspielen des Bandes erreicht. Die Größe und ggf. die Federkräfte der Andruckfedern sind je nach verwendeten Cassetten, deren Spulen und deren Spulenabständen unterschiedlich dimensioniert.

Jede Feder wird üblicherweise durch Ausstanzen aus einem Federblechstreifen in zweckmäßiger, materialsparender Weise und in schneller Stanzfolge hergestellt. Der entstehende Abfall ist zum einen stanztechnisch bedingt, wenn zum Beispiel Randstreifen zum Transport des Federstahlstreifens durch das Werkzeug benötigt werden, oder auch formbedingt, wenn zum Beispiel Innenausschnitte erforderlich sind, wie zum Beispiel bei der üblichen Rautenfeder der VHS-Cassette.

Zur Verminderung dieser Materialverluste wurden in der DE-OS 31 48 080, EP 0 060 497 und der US 4 368 860 zweckmäßige Ausführungsformen von Spulenandruckfedern vorgeschlagen. Die entsprechenden Federn haben jedoch den Nachteil, daß für jeden Federtyp ein gesondertes Werkzeug erforderlich ist.

Federn, die im wesentlichen parallele Längskanten besitzen und im Mittelbereich Befestigungseinrichtungen haben, sind aus dem DE-GM 83 35 294 sowie der US 4 496 118 bekannt. Die dort aufgeführten Federn sind jedoch insofern von Nachteil, daß sie beim Cassettengehäuse oder beim Cassettenfenster teilweise erhebliche Änderungen erfordern und zum anderen komplizierte Prägungen aufweisen.

Aus der EP-A 0 191 307 ist eine Magnetband-Cassette mit einer abgerundeten Andruckfeder bekannt, welche einen zentral angebrachten Vorsprung besitzt, der in eine entsprechende Vertiefung in der Cassetteninnenseite eintaucht und zusätzlich mehrere gleichmäßig um den Vorsprung vorgesehene Nietlöcher aufweist, welche in am Cassetteninnenteil vorgesehene Nieten eintauchen, wobei die Nietenenden bei der Montage der Cassette durch Erwärmen umgebogen werden und so die Federbefestigung bewirken.

Die EP-A 0 030 367 beschreibt eine Magnetband-Cassette, deren Andruckfeder V-förmig ausgebildet ist und die in einer Vertiefung an der Innenseite des Cassettenteils sitzt, bei welchem außerdem Positionierungselemente zur Erleichterung des Einsetzens der Feder in das Cassetteninnenteil während der Montage angespritzt sind.

Es bestand die Aufgabe, eine Magnetbandcassette mit einer Andruckfeder der oben genannten gattungsmäßigen Art zu finden, welche nicht die dargelegten Nachteile hat, die insbesondere nur unwesentliche Änderungen am Cassettengehäuse erfordert und bei der Montage einfach zu handhaben ist.

Neuerungsgemäß wurde die Aufgabe gelöst mit einer Bandcassette mit den im kennzeichnenden Teil des Anspruchs 1 aufgeführten Merkmalen. Weitere Einzelheiten der Erfindung gehen aus dem Unteranspruch, der Beschreibung und den Zeichnungen hervor.

Nachstehend wird die Neuerung anhand der Zeichnungen näher erläutert, und zwar zeigt
- Figur 1: eine zerlegte Videocassette ohne Frontklappe und Magnetbandspulen mit der neuerungsgemäßen Andruckfeder im Cassettenoberteil
- Figur 2: eine neuerungsgemäße Andruckfeder
- Figur 3: eine gebogene neuerungsgemäße Andruckfeder mit Auflagestegen
- Figur 4: Auflagepunkte zur Befestigung der neuerungsgemäßen Feder am Cassettengehäuse.

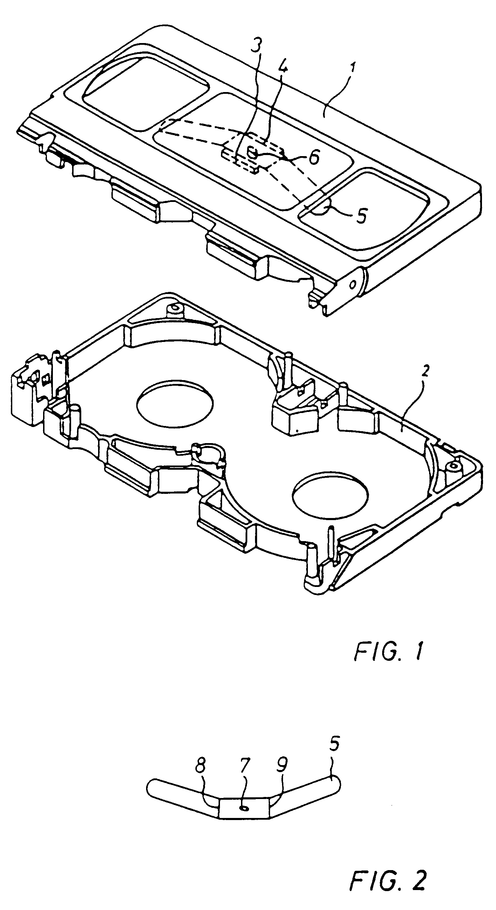

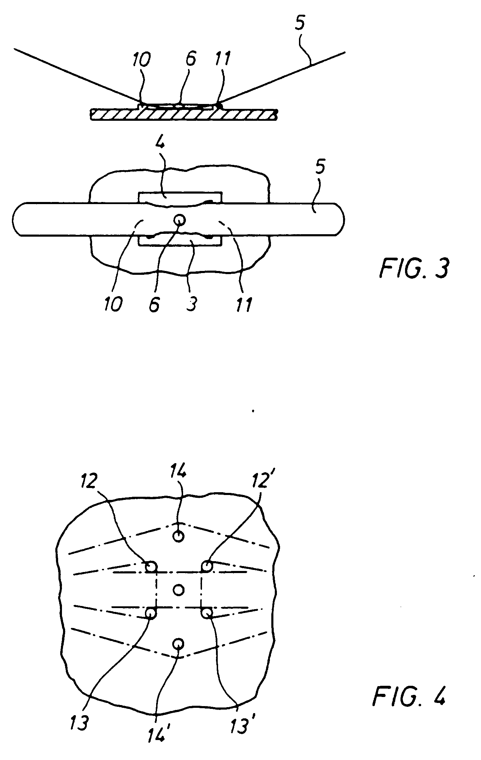

Das Wesen der Neuerung besteht darin, daß, wie in Figur 1 zu erkennen, in der Mitte des Innenteils beim Cassettenoberteil (1) parallel zu den Längskanten zwei Führungsstege (3, 4) angespritzt sind, deren Abstand der Breite der Andruckfeder (5) entspricht. Dazwischen ist eine Niete (6) angespritzt, in welche durch das in der Feder zentral vorgesehene Nietloch (7) die Feder einsteckbar ist. Die Andruckfeder gemäß Figur 2 liegt in einer bevorzugten Ausführung mit ihrem gesamten Mittelbereich auf dem Cassettenoberteil auf. Sie kann beiderseits den Mittelbereich (2) quer zur Längskante vorgesehene leichte Knicke (8, 9 )aufweisen; sie kann aber auch eine abgerundete Form ohne Knicke haben. In diesem Fall ist es zweckmäßig, daß sich die Feder wie in Figur 3 dargestellt, auf beiderseits der Niete (6) senkrecht zu den Führungsstegen (3, 4) angespritzten Auflagestegen (10, 11) aufstützt.

Beim Montieren der Cassettenteile wird die Andruckfeder (5) auf das Oberteil (1) auf dessen Innenseite aufgesteckt, dann wird durch Verschweißen die Niete (6) über das Nietloch (7) sowie die seitlichen Führungsstege (3, 4) entlang den Längskanten der Andruckfeder umgebogen, worauf diese zentral und seitlich sicher befestigt ist. Danach kann das restliche Zusammenfügen der Cassettenteile (1, 2) und das Einlegen des Magnetbandes erfolgen.

Eine weitere neuerungsgemäße Ausführungsform gemäß Figur 4 ist so aufgebaut, daß statt der Führungsstege angespritzte Führungspunkte (12, 12′, 13, 13′) ausgebildet sind. Diese können in materialsparender Weise ebenso die seitliche Führung bewirken. Bei passender Anbringung der Führungspunkte im Cassettengehäuse ist es möglich, bedarfsweise statt der neuerungsgemäßen Andruckfeder auch die übliche Rautenfeder einzubauen, wie sie beispielsweise aus der US-Patentschrift 4 544 062 bekannt ist. Dabei werden die in der Rautenfeder vorgesehenen Nietlöcher in die Nieten (14, 14′) eingeführt.

Die neuerungsgemäße Cassette hat den Vorteil, daß die Niete wie die Führungsstege durch minimale Werkzeugänderung geschaffen werden können, außerdem besteht der Vorteil der rationellen und sicheren Montage der Spulenandruckfeder am Cassettengehäuse. Weiterhin ist durch die beschriebene Auflage der Feder am Cassettengehäuse gewährleistet, daß im montierten Cassettenzustand keine übermäßige Zugspannung auf die zentrale Niete (6) ausgeübt wird.

## Patentansprüche

1. Magnetband-Cassette, bei der eine Andruckfeder am Cassettengehäuse befestigt ist, welche eine oder mehrere Bandspulen in Richtung einer definierten Betriebslage federnd belastet, die aus einem Blechstreifen hergestellt ist, im wesentlichen parallele Längskanten besitzt und im Mittelbereich als Befestigung ein oder mehrere Nietlöcher (7) aufweist, womit die Andruckfeder auf am Cassettenteil angespritzte Nieten (6) aufsteckbar ist, welche Niete in zusammengesetzten Zustand der Cassette durch Verschweißen die Andruckfeder am Cassettengehäuse befestigt, dadurch gekennzeichnet, daß die Andruckfeder (5) zwei leichte Knicke (8, 9) quer zur Längskante beiderseits ihres Mittelbereichs, mit dem sie auf der Innenseite des Cassettengehäuses aufliegt, besitzt, wobei in der Mitte der Innenseite des Cassettenteils parallel zu den Längskanten angespritzte Führungskanten (3, 4) vorgesehen sind, deren Breite der Breite der Andruckfeder entspricht, welche im zusammengesetzten Zustand der Cassette samt den Nieten (6) durch Verschweißen umgebogen sind und dabei die Andruckfeder fixieren und zusätzlich befestigen.

2. Magnetband-Cassette nach Anspruch 1, dadurch gekennzeichnet, daß die Andruckfeder (5) Statt der zwei leichten Knicke einen zentralen gerundeten Teil besitzt, welcher beiderseits auf Auflagestegen (10, 11) ruht, welche senkrecht zu den Führungskanten (3, 4) beiderseits der zentral angespritzten Niete (6) an der Cassetteninnenwand angespritzt sind.

## Claims

1. A magnetic tape cassette, in which there is fastened on the cassette housing a leaf spring which resiliently loads one or more tape reels in the direction of a defined operating position, is produced from a sheet-metal strip, has substantially parallel longitudinal edges and exhibits in the central region, as fastening, one or more rivet holes (7), whereby the leaf spring can be fitted onto rivets (6) molded onto the cassette part, which rivet in the assembled state of the cassette fastens the leaf spring to the cassette housing by welding, wherein the leaf spring (5) has two slight bends (8, 9) transversely to the longitudinal edge on both sides of its central region, by which it rests on the inner side of the cassette housing, there being provided in the center of the inner side of the cassette part guiding edges (3, 4) which are molded on parallel to the longitudinal edges, are of a width which corresponds to the width of the leaf spring and, in the assembled state of the cassette, are bent around together with the rivets (6) by welding and thereby fix and additionally fasten the leaf spring.

2. A magnetic tape cassette as claimed in claim 1, wherein the leaf spring (5) has instead of the two slight bends a central rounded part which on both sides rests on bearing webs (10, 11) which are molded on perpendicularly to the guiding edges (3, 4) on both sides of the centrally molded-on rivets (6) on the cassette inner wall.

## Revendications

1. Cassette à bande magnétique, dans laquelle un ressort de pressage est fixé sur la cassette et sollicite élastiquement une ou plusieurs bobines de bande en direction d'une position de fonctionnement définie, fabriquée à partir d'un ruban en tôle, comportant des arêtes longitudinales sensiblement parallèles et présentant en zone centrale un ou plusieurs trous de rivetage (7) à titre de fixation, faisant que le ressort de pressage est susceptible d'être enfilé sur les rivets (6) surmoulés par injection sur la partie de cassette, ces rivets assurant la fixation par soudure, à l'état assemblé de la cassette, du ressort de pressage sur le boîtier de cassette, caractérisée en ce que le ressort de pressage (5) comporte deux légers plis (8,9), orientées transversalement à l'arête longitudinale, des deux côtés de sa zone médiane, par laquelle il appuie sur la face intérieure du boîtier de cassette, au centre de la face intérieure de la partie de cassette étant prévues des arêtes de guidage (3,4), surmoulées par injection parallèlement aux arêtes longitudinales, dont la largeur correspond à la largeur du ressort de pressage et repliées, par soudage, avec les rivets (6) lorsque la cassette est à l'état assemblé et assurant la fixation du ressort de pressage par une fixation supplémentaire.

2. Cassette à bande magnétique selon la revendication 1, caractérisée en ce qu'au lieu des deux légers plis, le ressort de pressage (5) comporte une partie centrale arrondie reposant, des deux côtés, sur des nervures d'appui (10,11), surmoulées par injection sur la paroi intérieure de boîtier, perpendiculairement aux arêtes de guidage (3,4), des deux côtés des rivets (6) surmoulés par injection au centre.
